(19) Europäisches Patentamt
European Patent Office
Office européen des brevets

(11) EP 4 163 995 B1

(12) EUROPEAN PATENT SPECIFICATION

(45) Date of publication and mention of the grant of the patent:
**03.07.2024 Bulletin 2024/27**

(21) Application number: **22199083.1**

(22) Date of filing: **30.09.2022**

(51) International Patent Classification (IPC):
***H01M 4/134*** *(2010.01)* ***H01M 4/38*** *(2006.01)*
***H01M 4/505*** *(2010.01)* ***H01M 4/525*** *(2010.01)*
***H01M 4/62*** *(2006.01)* ***H01M 10/052*** *(2010.01)*
***H01M 4/02*** *(2006.01)*

(52) Cooperative Patent Classification (CPC):
**H01M 4/134; H01M 4/386; H01M 4/505; H01M 4/525; H01M 4/625; H01M 10/052;**
H01M 2004/021; H01M 2004/025; H01M 2004/027; Y02E 60/10

# (54) NEGATIVE ELECTRODE FOR RECHAREABLE LITHIUM BATTERY AND RECHAREABLE LITHIUM BATTERY INCLUDING SAME

NEGATIVE ELEKTRODE FÜR WIEDERAUFLADBARE LITHIUMBATTERIE UND WIEDERAUFLADBARE LITHIUMBATTERIE DAMIT

ÉLECTRODE NÉGATIVE POUR BATTERIE AU LITHIUM RECHARGEABLE ET BATTERIE AU LITHIUM RECHARGEABLE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2021 KR 20210131916**

(43) Date of publication of application:
**12.04.2023 Bulletin 2023/15**

(73) Proprietor: **Samsung SDI Co., Ltd.**
**Yongin-si, Gyeonggi-do 17084 (KR)**

(72) Inventors:
- **Kim, Minjae**
  **17084 Yongin-si, Gyeonggi-do (KR)**
- **Seol, Jongheon**
  **17084 Yongin-si, Gyeonggi-do (KR)**
- **Kim, Soochan**
  **17084 Yongin-si, Gyeonggi-do (KR)**
- **Jung, Hyeseung**
  **17084 Yongin-si, Gyeonggi-do (KR)**
- **Cho, Chaewoong**
  **17084 Yongin-si, Gyeonggi-do (KR)**
- **Hong, Minyoung**
  **17084 Yongin-si, Gyeonggi-do (KR)**
- **Nam, Junghyun**
  **17084 Yongin-si, Gyeonggi-do (KR)**
- **Han, Sungsoo**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**CN-B- 104 638 234**

- **ZHANG ET AL: "Composite anode material of silicon/graphite/carbon nanotubes for Li-ion batteries", ELECTROCHIMICA ACTA, ELSEVIER, AMSTERDAM, NL, vol. 51, no. 23, 15 June 2006 (2006-06-15) , pages 4994-5000, XP005457688, ISSN: 0013-4686, DOI: 10.1016/J.ELECTACTA.2006.01.043**
- **WEI WANG ET AL: "Vertically aligned silicon/carbon nanotube (VASCNT) arrays: Hierarchical anodes for lithium-ion battery", ELECTROCHEMISTRY COMMUNICATIONS, ELSEVIER AMSTERDAM, NL, vol. 13, no. 5, 10 February 2011 (2011-02-10), pages 429-432, XP028190638, ISSN: 1388-2481, DOI: 10.1016/J.ELECOM.2011.02.012 [retrieved on 2011-02-17]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 163 995 B1

## Description

## BACKGROUND OF THE INVENTION

### (a) Field of the Invention

It relates to a negative electrode for a rechargeable lithium battery and a rechargeable lithium battery including the same.

### (b) Description of the Related Art

A rechargeable lithium battery has recently drawn attention as a power source for small portable electronic devices. The rechargeable lithium battery uses an organic electrolyte solution and thereby, has twice or more a discharge voltage as that of a conventional battery using an alkali aqueous solution and accordingly, high energy density.

As for a positive active material of a rechargeable lithium battery, a lithium-transition metal oxide having a structure capable of intercalating/deintercalating lithium ions, such as $LiCoO_2$, $LiMn_2O_4$, $LiNi_{1-x}Co_xO_2$ ($0 < x < 1$), and the like has been used.

As for negative active materials, various carbon-based materials capable of intercalating/deintercalating lithium ions such as artificial graphite, natural graphite, hard carbon, and the like have been used. Recently, a non-carbon-based negative active material such as silicon or tin has been researched in order to obtain high capacity. Examples may be found the patent literature e.g. in CN104638234B, or scientific journals such as in "Composite anode material of silicon/graphite/carbon nanotubes for Li-ion batteries" by H.M. Cheng (ELECTROCHIMIA ACTA, ELSEVIER, XP5457688A) or "Vertically aligned silicon/carbon nanotube (VASCNT) arrays: Hierarchical anodes for lithium-ion battery" by Prashant N. Kumta (ELECTROCHEMISTRY COMMUNICATIONS, ELSEVIER, XP28190638A).

The above information disclosed in this Background section is only for enhancement of understanding of the background of the invention, and therefore it may contain information that does not form the prior art that is already known in this country to a person of ordinary skill in the art.

## SUMMARY OF THE INVENTION

The invention is defined by the appended claims. The description that follows is subjected to this limitation. Any disclosure lying outside the scope of said claims is only intended for illustrative as well as comparative purposes.

One embodiment provides a negative electrode for a rechargeable lithium battery exhibiting high energy density and excellent cycle-life characteristics.

Another embodiment provides a rechargeable lithium battery including the negative electrode.

According to the present invention there is provided a negative electrode for a rechargeable lithium battery as defined in claim 1. The negative electrode includes a current collector and a negative active material layer formed on the current collector, the negative active material layer including a negative active material and a conductive material, wherein the negative active material includes a silicon-based active material, the conductive material includes carbon nanotubes, and the negative electrode has an orientation represented by Equation 1 of 50 to 100.

[Equation 1]

$$\text{Orientation ratio} = I(110)/I(002)$$

In Equation 1, I(110) is a peak intensity at a (110) plane when XRD is measured by using a CuK$\alpha$ ray, and I(002) is a peak intensity at a (002) plane when XRD is measured by using a CuK$\alpha$ ray.

In one embodiment, the orientation ratio may be 54 to 95.

The silicon-based active material may be a silicon-carbon composite including crystalline carbon, silicon particles, and an amorphous carbon.

The conductive material may be multi-walled carbon nanotubes, single-walled carbon nanotubes, or a combination thereof.

The carbon nanotubes has an average length of 1 $\mu$m to 10 $\mu$m. The carbon nanotubes may have an average diameter of 1 nm to 5 nm.

The peak intensity is a peak integral area value.

According to another aspect of the present invention there is provided a rechargeable lithium battery including the above-mentioned negative electrode, a positive electrode, and an electrolyte.

Other embodiments are included in the following detailed description.

An electrode assembly for a rechargeable lithium battery may provide an economical rechargeable lithium battery with low battery resistance.

## BRIEF DESCRIPTION OF THE DRAWINGS

FIG. 1 is a schematic view showing orientations according to an embodiment.
FIG. 2 is an exploded perspective view of a rechargeable lithium battery according to an embodiment of the present invention.
FIG. 3 is a graph showing capacity retention of the half-cells according to Example 1 and Comparative Example 1.

## DETAILED DESCRIPTION OF THE INVENTION

Hereinafter, embodiments of the present invention are described in detail. However, these embodiments are merely examples, the present invention is not limited thereto and the present invention is defined by the scope of claims.

Unless otherwise defined in the specification, average particle diameter D50 means the diameter of particles having a cumulative volume of 50 volume % in the particle size distribution and may be measured by a PSA (particle size analyzer).

In the specification, "upper" and "lower" are defined based on the drawings, and "upper" may be changed to "lower" and "lower" may be changed to "upper" depending on the point of view. What is referred to as "on" or "above" may include where other structures are interposed in the middle as well as directly above. Otherwise, "directly on" or "directly above" indicates one with no other structure in the middle.

A negative electrode for a rechargeable lithium battery includes a current collector and a negative active material layer formed on the current collector, and the negative active material layer includes a negative active material and a conductive material. Herein, the negative active material includes a silicon-based active material and the conductive material includes carbon nanotubes.

The negative active material is oriented to the current collector with a predetermined angle.

The negative electrode has an orientation ratio represented by Equation 1 of 50 to 100, and according to one embodiment, 54 to 95.

[Equation 1]

$$\text{Orientation ratio} = I(110)/I(002)$$

In Equation 1, I(110) is a peak intensity at a (110) plane when XRD is measured by using a CuK$\alpha$ ray, and I(002) is a peak intensity at a (002) plane when XRD is measured by using a CuK$\alpha$ ray. Generally, the peak intensity indicates a height of a peak or an integral area of the peak, and according to an embodiment, the peak intensity indicates the integral area of a peak.

In the embodiment, the orientation ratio of the negative electrode having the above range indicates that the negative active material 3 is oriented to the current collector 1 with a predetermined angle (a), as shown in FIG. 1.

That is, the negative active material is not in the form of lying horizontally and parallel to the current collector and is positioned at a standing state at a predetermined angle to the current collector. When the orientation ratio is within the range, a resistance for transferring electrolyte in the negative electrode may be reduced and lithium ions may be readily transferred during charge and discharge. Thus, the effect for actively transferring lithium around the active material may be effectively obtained for using the silicon-based active material, rather than a carbon-based active material.

In one embodiment, the XRD is measured by using a CuK$\alpha$ ray as a target ray, and is measured for the prepared negative electrode. In one embodiment, the XRD value may be the same value from the measurement for the battery which is fabricated using the negative electrode, before performing formation charging and discharging.

The XRD is measuring by removing a monochromator in order to improve a peak intensity resolution. Herein, the measurement condition may be $2\theta = 20°$ to $80°$ and a scan speed (°/S) of 0.044 to 0.089, and a step size (°/step) of 0.013 to 0.039.

When the orientation ratio is out of the range, for example, more than 100, the resistance for moving the electrolyte in the negative electrode during charge and discharge is increased, thereby increasing battery resistance, and whereas, when it is less than 50, the compression may not be satisfied, thereby reducing energy density of the battery.

The orientation ratio of the negative electrode is extremely lower than about 300 to about 500 which is obtained

by not applying magnetic field.

The effect by reducing resistance caused from the smooth occurrence of lithium ions may be more effectively obtained when the silicon-based active material is used,

This is because the specific capacity (capacity per weight) of silicon is higher than graphite so that many lithium ions are required, and thus the effect by reducing resistance is greater. In addition, the silicon-based active material has volume expansion and a larger used amount per weight (mAh/g), compared to the carbon-based active material during charge and discharge, thereby effectively reducing the resistance for transferring lithium ions, so that the improvement for transferring lithium ions may be effectively obtained for adopting to the silicon-based active material, rather than the carbon-based active material.

The silicon-based active material may be crystalline or a silicon-carbon composite including carbon, silicon, and an amorphous carbon. For example, the silicon-based active material may be a silicon-carbon composite including a core including a crystalline carbon and silicon and an amorphous carbon coating layer surrounded on the core. Alternatively, the silicon-based active material may be a silicon-carbon composite including an agglomerated product in which crystalline carbon and silicon are agglomerated, and amorphous carbon positioned between the agglomerated product or on a surface of the agglomerated product.

The amorphous carbon may be soft carbon, hard carbon, mesophase pitch carbide, sintered cokes, or a combination thereof. The crystalline carbon may be natural graphite, artificial graphite, or a combination thereof.

In the silicon-carbon composite, an amount of silicon may be about 1 wt% to about 60 wt% based on the total, 100 wt% of the silicon-carbon composite, or according to one embodiment, about 3 wt% to about 60 wt%. Furthermore, in silicon-carbon composite, an amount of the amorphous carbon may be about 20 wt% to about 60 wt% based on the total, 100 wt% of the silicon-carbon composite and an amount of the crystalline carbon may be about 20 wt% to about 60 wt% based on the total, 100 wt% of the silicon-carbon composite.

The negative electrode having the orientation ratio may be prepared by coating a negative active material composition for preparing a negative active material layer and passing it through a magnetic field. When it is illustrated in more detail, the negative active material composition including the negative active material and a conductive material is coated on the current collector, passed through magnetism, that is, an area where the magnetic field is generated, dried, and pressed to prepare a negative active material layer.

As such, the passing through the area where the magnetic field is generated produces magnetic flux by a magnet in a vertical direction, but since the magnetic field according to a coating speed (a speed of moving the current collector) is formed at a predetermined angle as a vector function, so that "orientation" occurs, which indicates that the negative active material may stand at the predetermined angle on the current collector.

The area where the magnetic field is generated may be formed by arranging a magnet to be positioned to have a predetermined distance from the active material layer, and herein, the area may be an area in which the strength of the magnetic field measured on a surface of the active material layer may be about 2000 Gauss to about 5000 Gauss.

The strength of the magnetic field may be about 3000 Gauss to about 4000 Gauss. Furthermore, the speed for passing through the area where the magnetic field is generated may be about 3.0 m/min to about 5.0 m/min.

The negative active material layer composition may have a viscosity of about 500 cps to about 5000 cps, or about 1000 cps to 4000 cps, at room temperature (about 20 °C to about 25 °C). When the viscosity of the composition is within the range, the suitable orientation degree according to the applying the magnetic field may be effectively obtained.

When the strength of the magnetic field and the time for exposing the magnetic field are within the range, the orientation ratio of the negative electrode obtained is 50 to 100, and according to one embodiment, may be 54 to 94. If the strength of the magnetic field or the time for exposing the magnetic field is out of the range, it is not desired that the orientation degree of the negative electrode is not satisfied in the range.

In one embodiment, the conductive material may be carbon nanotubes, and the example of carbon nanotubes may be single-walled carbon nanotubes, multi-walled carbon nanotubes, or a combination thereof.

The inclusion of carbon nanotubes as a conductive material allows the distribution of the conductive material on a surface of the silicon-based active material, particularly, a surface of silicon to help formation of an electrical network, and maintain excellent electrical conductivity under the volume expansion/shrinkage during charge and discharge, thereby improving the cycle-life characteristics. Such an effect may not be obtained by using particle-shaped conductive material. Furthermore, such an effect may not be obtained by using a linear conductive material having high straightness such as carbon nanofiber (CNF) even though a linear conductive material is used, as it may insufficiently act to cover the surface of the active material.

The carbon nanotubes may have an average length of 1 μm to 10 μm. Specifically, the average length may be 1 μm to 6 μm. The carbon nanotubes may have a diameter of 1 nm to 5 nm. When the average length or the average diameter of carbon nanotubes is satisfied in the range, straightness is low (good bending), and even if carbon nanotubes are used at a small amount, it may be effectively distributed on the surface of the active material.

In one embodiment, the negative active material layer may further include a carbon-based active material together with the silicon-based active material. The carbon-based negative active material may be crystalline carbon or

amorphous carbon, or may be used therewith. The crystalline carbon may be unspecified shaped, sheet-shaped, flake-shaped, spherically-shaped, or fiber-shaped natural graphite or artificial graphite. The amorphous carbon may be soft carbon, hard carbon, mesophase pitch carbide, sintered cokes, and the like.

When the negative active material layer both includes the silicon-based active material and the carbon-based active material, the mixing ratio of the silicon-based active material and the carbon-based active material may be about 99 : 1 to about 1 : 99 by weight ratio. The negative active material layer may further include a binder.

In the negative active material layer, an amount of the conductive material may be about 0.01 wt% to about 5 wt%, about 0.01 wt% to about 3 wt%, about 0.01 wt% to about 2 wt%, about 0.01 wt% to about 1 wt%, or about 0.01 wt% to about 0.5 wt% based on the total of the negative active material layer.

An amount of the negative active material may be about 90 wt% to 98.99 wt%, and an amount of the binder may be about 1 wt% to about 5 wt% based on the total, 100 wt%, of the negative active material layer.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinylfluoride, polyurethane, polytetrafluoro ethylene, polyvinylidene fluoride, polyethylene, polypropylene, polyamide imide, polyimide, or a combination thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinylpyridine, chlorosulfonated polyethylene, latex, polyester resin, an acrylic resin, a phenolic resin, an epoxy resin, polyvinyl alcohol, or a combination thereof.

When the aqueous binder is used as a negative electrode binder, a cellulose-based compound may be further used to provide viscosity as a thickener. The cellulose-based compound includes one or more of carboxymethyl cellulose, hydroxypropyl methylcellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The current collector may include one selected from a copper foil, a nickel foil, a stainless steel foil, a titanium foil, a nickel foam, a copper foam, a polymer substrate coated with a conductive metal, and a combination thereof, but is not limited thereto.

A rechargeable lithium battery according to one embodiment includes the negative electrode, a positive electrode, and an electrolyte.

The positive electrode may include a current collector and a positive active material layer formed on the current collector. The positive electrode active material may include lithiated intercalation compounds that reversibly intercalate and deintercalate lithium ions. Specifically, one or more composite oxides of a metal selected from cobalt, manganese, nickel, and a combination thereof, and lithium may be used. More specifically, the compounds represented by one of the following chemical formulae may be used. $Li_aA_{1-b}X_bD_2$ ($0.90 \leq a \leq 1.8$, $0 \leq b \leq 0.5$); $Li_aA_{1-b}X_bO_{2-c}D_c$ ($0.90 \leq a \leq 1.8$, $0 \leq b \leq 0.5$, $0 \leq c \leq 0.05$); $Li_aE_{1-b}X_bO_{2-c}D_c$ ($0.90 \leq a \leq 1.8$, $0 \leq b \leq 0.5$, $0 \leq c \leq 0.05$); $Li_aE_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cD_\alpha$ ($0.90 \leq a \leq 1.8$, $0 \leq b \leq 0.5$, $0 \leq c \leq 0.5$, $0 < \alpha \leq 2$); $Li_aNi_{1-b-c}Co_bX_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Co_bX_cO_{2-\alpha}T_2$ ($0.90 \leq a \leq 1.8$, $0 \leq b \leq 0.5$, $0 \leq c \leq 0.5$, $0 < \alpha < 2$); $Li_aNi_{1-b-c}Mn_bX_cD_\alpha$ ($0.90 \leq a \leq 1.8$, $0 \leq b \leq 0.5$, $0 \leq c \leq 0.5$, $0 < \alpha \leq 2$); $Li_aNi_{1-b-c}Mn_bX_cO_{2-\alpha}T_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}T_2$ ($0.90 \leq a \leq 1.8$, $0 \leq b \leq 0.5$, $0 \leq c \leq 0.5$, $0 < \alpha < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$); $Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ ($0.90 \leq a \leq 1.8$, $0.001 \leq b \leq 0.1$) $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2PO_{43}$ ($0 \leq f \leq 2$); $Li_{(3-f)}Fe_2PO_{43}$ ($0 \leq f \leq 2$); $Li_aFePO_4$ ($0.90 \leq a \leq 1.8$)

In the above chemical formulae, A is selected from Ni, Co, Mn, and a combination thereof; X is selected from Al, Ni, Co, Mn, Cr, Fe, Mg, Sr, V, a rare earth element, and a combination thereof; $D^1$ is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example,

the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment of the present invention, the positive active material layer may further include a binder and a conductive material. Herein, the binder and the conductive material may be included in an amount of about 1 wt% to about 5 wt%, respectively based on the total amount of the positive active material layer.

The binder improves binding properties of positive electrode active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone, and the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance and it may be well known to one in related art.

Furthermore, the carbonate-based solvent may desirably include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

The organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

[Chemical Formula 1]

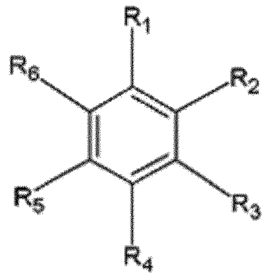

In Chemical Formula 1, $R_1$ to $R_6$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, an ethylene carbonate-based compound represented by Chemical Formula 2, as an additive for improving cycle life.

[Chemical Formula 2]

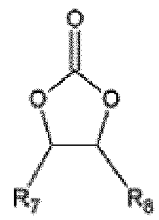

In Chemical Formula 2, $R_7$ and $R_8$ are the same or different and may each independently be hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving the cycle-life characteristics may be used within an appropriate range.

The non-aqueous organic solvent may also include vinylethylene carbonate, hexane tricyanide, lithium tetrafluoroborate, propane sultone, etc., as an additive.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts selected from $LiPF_6$, $LiBF_4$, $LiSbF_6$, $LiAsF_6$, LiN $(SO_2C_2F_5)_2$, Li $(CF_3SO_2)_2N$, LiN $(SO_3C_2F_5)_2$, $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, wherein, x and y are natural numbers, for example, an integer of 1 to 20, lithium difluoro(bisoxolato) phosphate), LiCl, LiI, $LiB(C_2O_4)_2$ (lithium bis(oxalato) borate: LiBOB) and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride, or multilayers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 2 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 2, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

(Example 1)

97.45 wt% of a silicon-carbon composite negative active material, 0.05 wt% of single-walled carbon nanotubes (SWCNT, average length: 5 μm, average diameter: 1.5 nm), and 1.5 wt% of styrene butadiene rubber, and 1.0 wt% of carboxymethyl cellulose were mixed in a water solvent to prepare a slurry for a negative active material layer having a viscosity of 1830 cps (at 25 °C).

The silicon-carbon composite including a core including artificial graphite and silicon nanoparticles, and a soft carbon coating layer formed on the surface of the core, was used. Herein, an amount of artificial graphite was 40 wt%, an amount of the silicon nanoparticles was 40 wt%, and an amount of the amorphous carbon was 20 wt% based on the total weight of the silicon-carbon composite.

The slurry for a negative active material layer was coated on a Cu foil and the coated Cu foil was -moved to pass through an area where the magnetic field was generated at a rate of a 4.0 m/min. The area where the magnetic field was generated was used as an area that the magnet was positioned to have a predetermined gap from the Cu foil, and the magnetic field generated by the magnet in the area was 3500 Gauss on the surface of the Cu foil.

Thereafter, the obtained product was dried and pressed to produce a negative electrode.

96 wt% of $LiCoO_2$, 2 wt% of ketjen black, and 2 wt% of polyvinylidene fluoride were mixed in an N-methyl pyrrolidone solvent to prepare a positive active material slurry. The positive active material slurry was coated on an Al current collector and dried followed by pressing to prepare a positive electrode.

Using the negative electrode, a polyethylene/polypropylene separator, the positive electrode, and an electrolyte solution, a rechargeable lithium cell battery was fabricated by the general procedure. The electrolyte was prepared by using a mixed solvent of ethylene carbonate and diethyl carbonate (50:50 volume ratio) and dissolving 1 M $LiPF_6$ therein.

(Example 2)

A negative electrode and a rechargeable lithium cell were fabricated by the same procedure as in Example 1, except that the magnetic field generated by the magnet was controlled to have 3000 Gauss.

(Example 3)

A negative electrode and a rechargeable lithium cell were fabricated by the same procedure as in Example 1, except that the magnetic field generated by the magnet was controlled to have 4000 Gauss.

(Example 4)

A negative electrode and a rechargeable lithium cell were fabricated by the same procedure as in Example 1, except that 97.47 wt% of the silicon-carbon composite negative active material, 0.03 wt% of single-walled carbon nanotubes (average length: 5 μm, average diameter: 1.5 nm), 1.5 wt% of styrene butadiene rubber, and 1 wt% of carboxymethyl cellulose were mixed in a water solvent to prepare a slurry for a negative active material layer having 1720 cps (at 25 °C), and the slurry for the negative active material layer was used.

(Example 5)

A negative electrode and a rechargeable lithium cell were fabricated by the same procedure as in Example 1, except that 97.4 wt% of the silicon-carbon composite negative active material, 0.1 wt% of multi-walled carbon nanotube (average length: 5 μm, average diameter: 1.5 nm), 1.5 wt% of styrene butadiene rubber, and 1 wt% of carboxymethyl cellulose were mixed in an water solvent to prepare a slurry for a negative active material layer having 1910 cps (at 25 °C), and the slurry for the negative active material layer was used.

(Comparative Example 1)

A negative electrode and a rechargeable lithium cell were fabricated by the same procedure as in Example 1, except that 97 wt% of the silicon-carbon composite negative active material, 0.5 wt% of ketjen black, 1.5 wt% of styrene butadiene rubber, and 1 wt% of carboxymethyl cellulose were mixed in an water solvent to prepare a slurry for a negative active material layer having 1790 cps (at 25 °C), and the slurry for the negative active material layer was use.

(Comparative Example 2)

A negative electrode and a rechargeable lithium cell were fabricated by the same procedure as in Example 1, except that 97.45 wt% of the silicon-carbon composite negative active material, 0.05 wt% of single-walled carbon nanotubes (average length: 5 μm, average diameter: 1.5 nm), 1.5 wt% of styrene butadiene rubber, and 1 wt% of carboxymethyl cellulose were mixed in an water solvent to prepare a slurry for a negative active material layer having 1680 cps (at 25 °C), and the slurry for the negative active material layer was used.

(Comparative Example 3)

A negative electrode and a rechargeable lithium cell were fabricated by the same procedure as in Comparative Example 1, except that the magnetic field generated by the magnet was controlled to have 1000 Gauss.

(Comparative Example 4)

A negative electrode and a rechargeable lithium cell were fabricated by the same procedure as in Comparative Example 1, except that the magnetic field generated by the magnet was controlled to have 8000 Gauss.

(Comparative Example 5)

97 wt% of a artificial graphite negative active material, 0.1 wt% of single-walled carbon nanotubes (average length: 5 μm, average diameter: 1.5 nm), 1.5 wt% of styrene butadiene rubber, and 1.0 wt% of carboxymethyl cellulose were mixed in an water solvent to prepare a slurry for a negative active material layer having a viscosity of 1900 cps (at 25 °C).
The slurry for the negative active material layer was coated on a Cu foil and dried followed by pressing a negative electrode.
A rechargeable lithium cell was fabricated by the same procedure as in Example 1, except that the negative electrode was used.
The amounts of the active material and the conductive material, the type of the conductive material, the strength of the magnetic field, and the viscosity of the slurry are summarized in Table 1.

Table 1

| | Active material (wt%) | Conductive material (wt%) | Strength of magnetic field (Gauss) | Viscosity (cps, at 25 °C) |
|---|---|---|---|---|
| Example 1 | silicon-carbon composite 97.45 | SWCNT 0.05 | 3500 | 1830 |
| Example 2 | silicon-carbon composite 97.45 | SWCNT 0.05 | 3000 | 1830 |
| Example 3 | silicon-carbon composite 97.45 | SWCNT 0.05 | 4000 | 1830 |
| Example 4 | silicon-carbon composite 97.47 | SWCNT 0.03 | 3500 | 1720 |
| Example 5 | silicon-carbon composite 97.4 | SWCNT 0.1 | 3500 | 1910 |
| Comparative Example 1 | silicon-carbon composite 97 | Ketjen black 0.5 | 3500 | 1790 |

(continued)

| | Active material (wt%) | Conductive material (wt%) | Strength of magnetic field (Gauss) | Viscosity (cps, at 25 °C) |
|---|---|---|---|---|
| Comparative Example 2 | artificial graphite 97.45 | SWCNT 0.05 | 3500 | 1680 |
| Comparative Example 3 | silicon-carbon composite 97 | Ketjen black 0.5 | 1000 | 1790 |
| Comparative Example 4 | silicon-carbon composite 97 | Ketjen black 0.5 | 8000 | 1790 |
| Comparative Example 5 | artificial graphite 97.4 | SWCNT 0.1 | 3500 | 1900 |

Experimental Example 1) Measurement of orientation ratio

The orientation ratio for the negative electrodes according to Examples 1 to 5 and Comparative Examples 1 to 5 were measured. As for the negative electrodes, X'Pert (PANalytical B.V.) XRD equipment using a CuK$\alpha$ ray as a target ray was used, but monochromator equipment was removed in order to improve a peak intensity resolution. Herein, the measurement was performed under a condition of 2$\theta$ = 20° to 80°, a scan speed (°/S) = 0.06436, and a step size of 0.026°/step.

The measured XRD results are shown in Table 1. The results are shown by measuring an area of peak occurring at 2$\theta$=26.5$\pm$0.2° (002 plane) and 77.5$\pm$0.2° (110 plane).

From these results, an orientation ratio (I(110)/I(002)) was calculated. The results are shown in Table 2.

Experimental Example 2) Measurement of resistance

The specific resistances (resistance value passing in the vertical direction of the negative electrode) for the negative electrodes according to Examples 1 to 5 and Comparative Examples 1 to 5 were measured. The results are shown in Table 2.

Furthermore, the active mass resistance and the interfacial resistance of the negative active material layer according to Examples 1 to 5 and Comparative Examples 1 to 5 were measured using an electrode resistance meter (Hioki Ltd., in-plane). The results are shown in Table 2. the active mass refers to an active material layer.

The specific resistance indicates applied electric current resistance, the active mass resistance indicates volume resistance, and the interfacial resistance indicates a contact resistance between the negative active material layer and the current collector.

Table 2

| | Orientation ratio | | | Resistance | | |
|---|---|---|---|---|---|---|
| | I(110) | I(002) | Orientation ratio | Specific resistance ($\Omega$m) | Active mass resistance ($\Omega$cm) | Interfacial resistance ($\Omega cm^2$) |
| Comparative Example 1 | 33170.19 | 477.575 | 69.45344 | 0.29 | 0.0421 | 0.0267 |
| Comparative Example 2 | 77246.4 | 940.532 | 82.13059 | 0.28 | 0.0441 | 0.0231 |
| Comparative Example 3 | 75125.14 | 213.147 | 352.45613 | 0.29 | 0.0399 | 0.0251 |
| Comparative Example 4 | 18291.18 | 600.142 | 30.41312 | 0.29 | 0.0411 | 0.0381 |
| Comparative | 68299.24 | 923.862 | 73.92800 | 0.27 | 0.0383 | 0.0301 |
| Example 5 | | | | | | |

(continued)

| | Orientation ratio | | | Resistance | | |
|---|---|---|---|---|---|---|
| | I(110) | I(002) | Orientation ratio | Specific resistance (Ωm) | Active mass resistance (Ωcm) | Interfacial resistance ($\Omega cm^2$) |
| Example 1 | 38195.72 | 471.61 | 91.45203 | 0.29 | 0.0406 | 0.0297 |
| Example 2 | 39041.61 | 508.647 | 76.77558 | 0.28 | 0.04174 | 0.0292 |
| Example 3 | 95072.03 | 960.840 | 98.17477 | 0.30 | 0.04310 | 0.0301 |
| Example 4 | 61809.22 | 831.791 | 74.30859 | 0.29 | 0.0387 | 0.0287 |
| Example 5 | 48487.42 | 758.812 | 63.89912 | 0.28 | 0.0367 | 0.0279 |

As shown in Table 1, the changes in resistance using the single-walled carbon nanotube conductive material rarely occurred and the orientation ratio was different according to the applying of the magnetic field.

Experimental Example 2) Measurement of the cycle-life characteristics

The rechargeable lithium cells according to Examples 1 to 5 and Comparative Examples 1 to 5 were charged and discharged. The charging and the discharging condition was a constant current and constant voltage charged under a 1.0 C, 4.4 V, 0.1 C cut-off condition at 25°C, paused for 5 minutes, constant current discharged under a 1.0 C, 3.0 V cut-off condition, and paused for 5 minutes, which was to be 1 cycle, and the charging and the discharging was performed for 400 cycles. The capacity retention according the repeated cycles was obtained by calculating discharge capacity at each cycle to $1^{st}$ discharge. The results are shown in Table 3, and the results of Example 1 and Comparative Example 1 from these results are shown in FIG. 3.

Table 3

| | Capacity retention (%) |
|---|---|
| Example 1 | 84.5 |
| Example 2 | 84.2 |
| Example 3 | 84.3 |
| Example 4 | 84 |
| Example 5 | 84.5 |
| Comparative Example 1 | 77.5 |
| Comparative Example 2 | 80.1 |
| Comparative Example 3 | 76.3 |
| Comparative Example 4 | 76.2 |
| Comparative Example 5 | 81.7 |

As shown in Table 3, Examples 1 to 5 using the silicon-based active material and single-walled carbon nanotube conductive material and having an orientation ratio of 50 to 100 exhibited excellent capacity retention. Whereas, Comparative Example 1 using the ketjen black conductive material, although it had an orientation ratio of 50 to 100, exhibited deteriorated capacity retention. Comparative Examples 3 and 4 having the orientation ratio of 50 to 100, although the single-walled carbon nanotube conductive material was used, exhibited deteriorated capacity retention.

Furthermore, Comparative Examples 2 and 5 using the artificial graphite negative active material, although the single-walled carbon nanotube conductive material was used and the negative active material had an orientation ratio of 50 to 100, exhibited poor capacity retention.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A negative electrode (20) for a rechargeable lithium battery (100), comprising:

a current collector (1); and
a negative active material layer formed on the current collector (1), including a negative active material (3) and a conductive material,
wherein the negative active material (3) comprises a silicon-based active material,
the conductive material comprises carbon nanotubes,
the negative electrode has an orientation ratio represented by Equation 1 of 50 to 100, and
the carbon nanotubes have an average length of 1 μm to 10 μm:

[Equation 1]

$$\text{Orientation ratio} = I(110)/I(002)$$

wherein in Equation 1,
I(110) is a peak intensity at a (110) plane when XRD is measured by using a CuKα ray, and
I(002) is a peak intensity at a (002) plane when XRD is measured by using a CuKα ray, the peak intensity is a peak integral area value,
wherein the XRD measurement condition are 2θ= 20° to 80°, a scan speed (°/S) of 0.044 to 0.089, and a step size (°/step) of 0.013 to 0.039.

2. The negative electrode for a rechargeable lithium battery of claim 1, wherein the orientation ratio is 54 to 95.

3. The negative electrode for a rechargeable lithium battery of claim 1, wherein the conductive material is multi-walled carbon nanotubes, single-walled carbon nanotubes, or a combination thereof.

4. The negative electrode for a rechargeable lithium battery of claim 1, wherein the silicon-based active material includes a silicon-carbon composite including crystalline carbon, silicon particles, and an amorphous carbon.

5. The negative electrode for a rechargeable lithium battery of claim 1, wherein the carbon nanotubes have an average diameter of 1 nm to 5 nm.

6. A rechargeable lithium battery (100), comprising

a negative electrode (20) of any one of claim 1 to claim 5;
a positive electrode (10); and
an electrolyte.

## Patentansprüche

1. Negative Elektrode (20) für eine wiederaufladbare Lithiumbatterie (100), umfassend:

einen Stromabnehmer (1); und
eine Schicht mit negativem Aktivmaterial, die auf dem Stromabnehmer (1) ausgebildet ist und die ein negatives Aktivmaterial (3) und ein leitfähiges Material enthält,
wobei das negative Aktivmaterial (3) ein Aktivmaterial auf Siliciumbasis umfasst,
das leitfähige Material Kohlenstoff-Nanoröhren umfasst,
die negative Elektrode ein Ausrichtungsverhältnis, dargestellt durch Gleichung 1, von 50 bis 100 aufweist und
die Kohlenstoff-Nanoröhren eine durchschnittliche Länge von 1 μm bis 10 μm aufweisen:

[Gleichung 1]

$$\text{Ausrichtungsverhältnis} = I(110)/I(002)$$

wobei in Gleichung 1
I(110) eine Spitzenintensität an einer (110)-Ebene ist, wenn XRD unter Verwendung eines CuKα-Strahls gemessen wird, und
I(002) eine Spitzenintensität an einer (002)-Ebene ist, wenn XRD unter Verwendung eines CuKα-Strahls gemessen wird, wobei die Spitzenintensität ein Spitzen-Integralflächenwert ist,
wobei die XRD-Messbedingungen 2θ = 20° bis 80°, eine Abtastgeschwindigkeit (°/s) von 0,044 bis 0,089 und eine Schrittgröße (°/Schritt) von 0,013 bis 0,039 sind.

**2.** Negative Elektrode für eine wiederaufladbare Lithiumbatterie nach Anspruch 1, wobei das Ausrichtungsverhältnis 54 bis 95 beträgt.

**3.** Negative Elektrode für eine wiederaufladbare Lithiumbatterie nach Anspruch 1, wobei es sich bei dem leitfähigen Material um mehrwandige Kohlenstoff-Nanoröhren, einwandige Kohlenstoff-Nanoröhren oder eine Kombination davon handelt.

**4.** Negative Elektrode für eine wiederaufladbare Lithiumbatterie nach Anspruch 1, wobei das Aktivmaterial auf Siliciumbasis ein Silicium-Kohlenstoff-Verbundmaterial enthält, das kristallinen Kohlenstoff, Siliciumpartikel und einen amorphen Kohlenstoff enthält.

**5.** Negative Elektrode für eine wiederaufladbare Lithiumbatterie nach Anspruch 1, wobei die Kohlenstoff-Nanoröhren einen mittleren Durchmesser von 1 nm bis 5 nm aufweisen.

**6.** Wiederaufladbare Lithiumbatterie (100), umfassend

eine negative Elektrode (20) nach einem von Anspruch 1 bis Anspruch 5;
eine positive Elektrode (10); und
einen Elektrolyten.

## Revendications

**1.** Électrode négative (20) pour une batterie au lithium rechargeable (100), comprenant :

un collecteur de courant (1) ; et
une couche de matériau actif négatif formé sur le collecteur de courant (1), comportant un matériau actif négatif (3) et un matériau conducteur,
dans laquelle le matériau actif négatif (3) comprend un matériau actif à base de silicium,
le matériau conducteur comprend des nanotubes de carbone,
l'électrode négative présente un rapport d'orientation représenté par l'équation 1 de 50 à 100, et
les nanotubes de carbone ont une longueur moyenne de 1 μm à 10 μm :

[Équation 1]

$$\text{Rapport d'orientation} = I(110)/I(002)$$

dans laquelle dans l'équation 1,
I(110) est une intensité maximale au niveau d'un plan (110) lorsqu'une XRD est mesurée en utilisant un rayon CuKα, et
I(002) est une intensité maximale au niveau d'un plan (002) lorsque la XRD est mesurée en utilisant un rayon CuKα, l'intensité maximale étant une valeur de surface intégrale maximale,
dans laquelle la condition de mesure XRD est 2θ = 20° à 80°, une vitesse de balayage (°/S) de 0,044 à 0,089 et une taille de pas (°/pas) de 0,013 à 0,039.

**2.** Électrode négative pour une batterie au lithium rechargeable selon la revendication 1, dans laquelle le rapport d'orientation est de 54 à 95.

**3.** Électrode négative pour une batterie au lithium rechargeable selon la revendication 1, dans laquelle le matériau conducteur est des nanotubes de carbone à parois multiples, des nanotubes de carbone à parois uniques ou une

combinaison de ceux-ci.

4. Électrode négative pour une batterie au lithium rechargeable selon la revendication 1, dans laquelle le matériau actif à base de silicium comporte un composite silicium-carbone comportant un carbone cristallin, des particules de silicium et un carbone amorphe.

5. Électrode négative pour une batterie au lithium rechargeable selon la revendication 1, dans laquelle les nanotubes de carbone ont un diamètre moyen de 1 nm à 5 nm.

6. Batterie au lithium rechargeable (100), comprenant

   une électrode négative (20) selon l'une quelconque de la revendication 1 à la revendication 5 ;
   une électrode positive (10) ; et
   un électrolyte.

FIG. 1

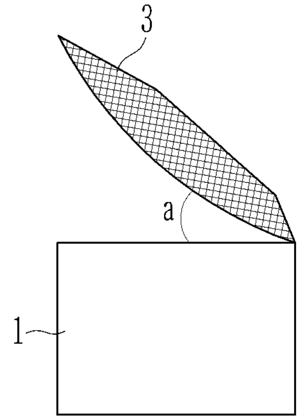

FIG. 2

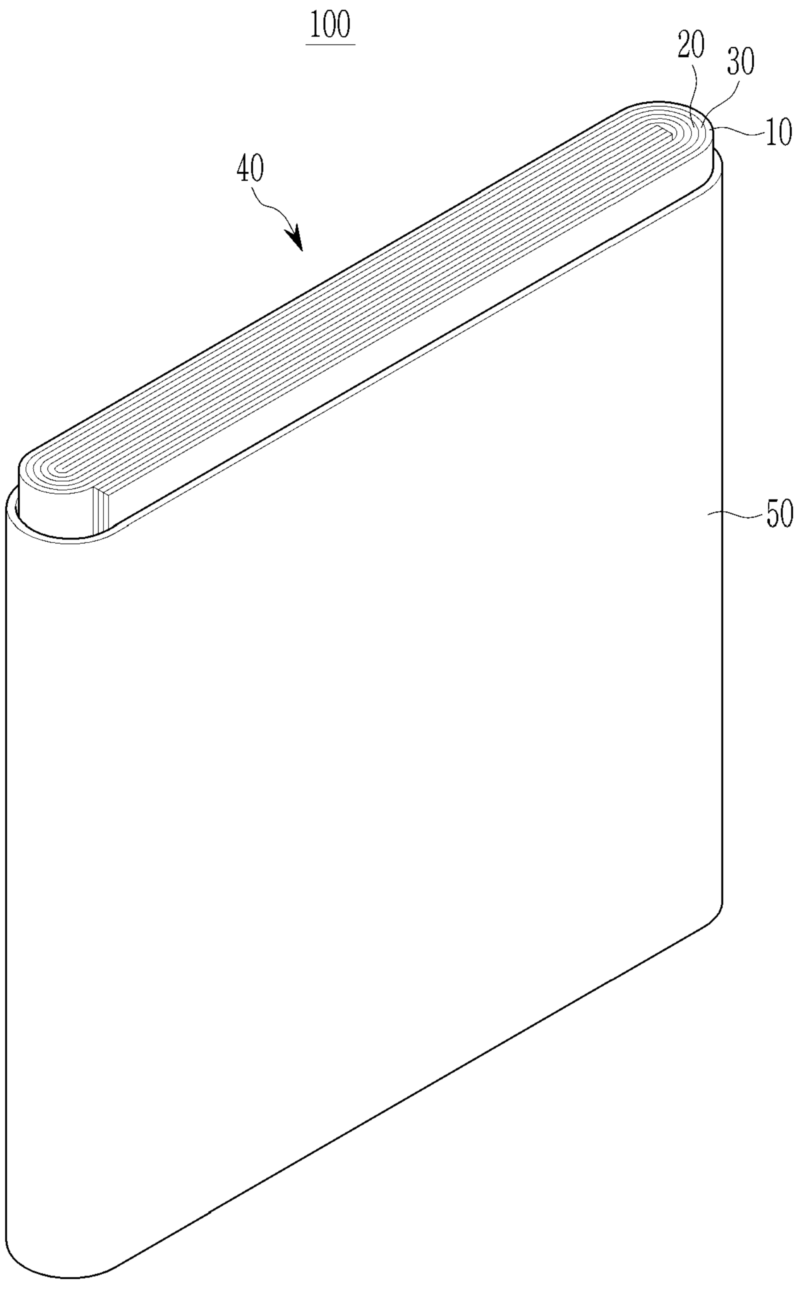

FIG. 3

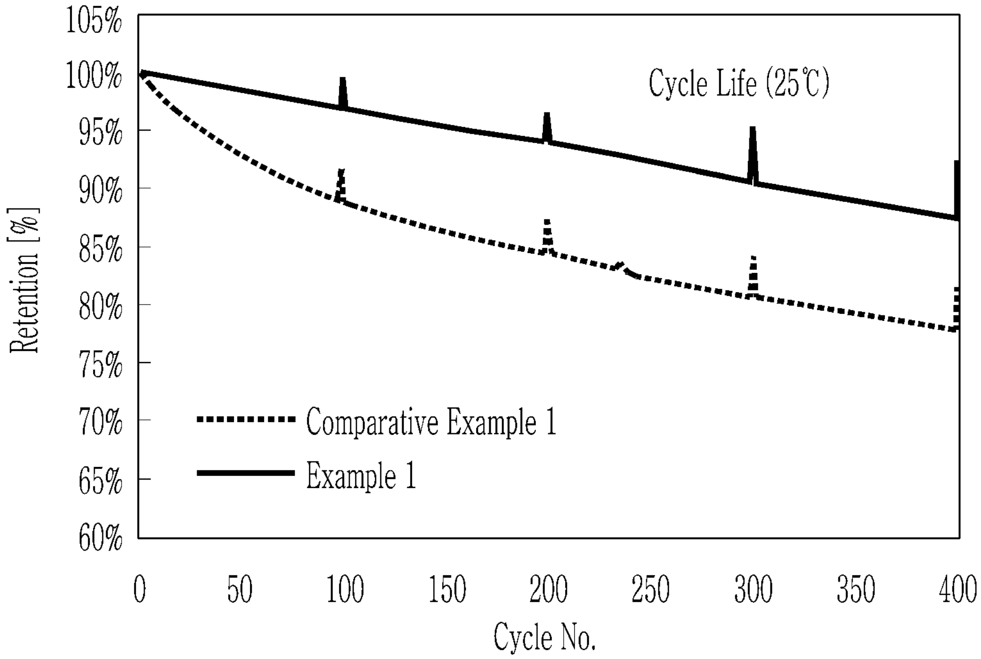
105%
100%
95%
90%
85%
80%
75%
70%
65%
60%
Retention [%]
Cycle Life (25℃)
Comparative Example 1
Example 1
0
50
100
150
200
250
300
350
400
Cycle No.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 104638234 B


### Non-patent literature cited in the description


- Composite anode material of silicon/graphite/carbon nanotubes for Li-ion batteries. **H.M. CHENG.** ELECTROCHIMIA ACTA. ELSEVIER
- Vertically aligned silicon/carbon nanotube (VASCNT) arrays: Hierarchical anodes for lithium-ion battery. **PRASHANT N. KUMTA.** ELECTROCHEMISTRY COMMUNICATIONS. ELSEVIER